# EUROPÄISCHE PATENTSCHRIFT

(11) **EP 0 602 508 B1**
(45) Veröffentlichungstag und Bekanntmachung des Hinweises auf die Patenterteilung: **11.11.1998**
(21) Anmeldenummer: 93119713.1
(22) Anmeldetag: 07.12.1993
(51) Int. Cl.: C08F 10/00, C08F 4/613, C08F 4/615, C08F 10/02

(54) **Verfahren zur Homo- und Copolymerisation von 1-Olefinen**
Process for the homopolymerisation and copolymerisation of 1-olefins
Procédé d'homo- et de co-polymérisation de 1-oléfines

(30) Priorität: 16.12.1992 DE 4242588
(43) Veröffentlichungstag der Anmeldung: 22.06.1994
(73) Patentinhaber: Hostalen Polyethylen GmbH, 65926 Frankfurt/M (DE)
(72) Erfinder: Hettich, Bernhard, Dr., D-65817 Eppstein/Taunus (DE); Böhm, Ludwig, Dr., D-65795 Hattersheim/Main (DE); Bilda, Dieter, Dr., D-65929 Frankfurt/Main (DE); Lutz, Paul, D-65439 Flörsheim/Main (DE); Sens, Oliver, D-65929 Frankfurt/Main (DE)

(56) Entgegenhaltungen:
- EP-A- 0 526 891
- DE-A- 4 017 661
- GB-A- 2 015 548

## Beschreibung

Die Erfindung bezieht sich auf ein Verfahren zur Polymerisation von 1-Olefinen mittels eines geträgerten, mehrere verschiedene Übergangsmetalle enthaltenden Ziegler-Katalysators.

GeträgerteZiegler-Natta-Katalysatoren,welche mehrere Übergangsmetalle nebeneinander enthalten, sind bekannt( vgl. EP 137 258, EP 286 148, DE 32 42 150, DE 33 24 136, US 4 518 751, US 4 472 523, WO 91/13914, DE 41 02 300). Allerdings werden diese Katalysatoren häufig in komplizierten Herstellverfahren synthetisiert, indem beispielsweise der entstehende Festkörper getrocknet, teilweise auch calziniert und isoliert wird. Manche Katalysatoren benötigen zu ihrer Herstellung und katalytischen Wirkung noch zusätzliche Elektronendonoren in Form von Nichtmetallchloriden (wie z.B. SiCl₄, BCl₃). Auch muß häufig das Trägermaterial aus SiO₂, SiO₂/Al₂O₃ oder Kombinationen von unterschiedlichen Trägermaterialien SiO₂/MgCl₂ speziell hergestellt und aufbereitet werden.

Bekannt ist weiterhin ein Verfahren zur Herstellung eines Poly-1-olefins, bei welchem ein Trägerkatalysator auf Basis eines gelartigen Magnesiumalkoholats eingesetzt wird (vgl. WO 91/18934). Der verwendete Katalysator besitzt eine ausgezeichnete Aktivität, sehr gute Wasserstoffansprechbarkeit, gutes Copolymerisationsverhalten und erzeugt eine ausgezeichnete Polymerpulver-Morphologie (große mittlere Korngrößen, enge Korngrößen-Verteilung und eine hohe Schüttdichte). Allerdings können mit diesem Katalysator in einstufiger Verfahrensweise keine Produkte hergestellt werden, welche eine breite Molmassenverteilung aufweisen, da dieser Katalysator prinzipiell nur Polyolefine mit einer engen MGV (M_{w}/Mₙ ≤ 6; MFR ≤ 10) liefert.

Schließlich ist ein Katalysator vorgeschlagen worden, welcher ein Polyolefin mit einer mittleren Breite der Molmassenverteilung (M_{w}/Mₙ ≤ 8; MFR ≤ 13) liefert (vgl. DE 41 26 093). Dieser Katalysator ist allerdings im Herstellungsprozeß komplizierter und teurer.

Es bestand die Aufgabe, einen Trägerkatalysator zu schaffen, der ein Polyolefin mit breiter Molmassenverteilung liefert. Darüber hinaus sollte die Herstellung des Katalysators möglichst einfach sein. Außerdem sollte der Katalysator eine hohe Aktivität, gute Wasserstoffansprechbarkeit und gutes Copolymerisationsverhalten besitzen und zu einer ausgezeichneten Morphologie des erzeugten Polymerpulvers führen.

Die Aufgabe wird dadurch gelöst, daß ein im wesentlichen aus MgCl₂ bestehender Träger mit unterschiedlichen aktiven Zentren mit verschiedenen Übergangsmetallen versehen wird, welche bei der Polymerisation eine unterschiedliche Kettenlänge liefern.

Die Erfindung betrifft somit ein Verfahren zur Herstellung eines Polyolefins mit einem MFR-Wert gleich oder größer 10 durch Polymerisation eines 1-Olefins der Formel R¹CH=CH₂, in der R¹ Wasserstoff oder einen Alkylrest mit 1 bis 10 Kohlenstoffatomen bedeutet, in Suspension, in Lösung oder in der Gasphase, bei einer Temperatur von 20 bis 200°C und einem Druck von 0,5 bis 50 bar, in Gegenwart eines Katalysators, der aus dem Umsetzungsprodukt einer Magnesiumalkoholat-Dispersion, deren Teilchengröße 100 bis 3000 nm beträgt, mit einer Übergangsmetallverbindung (Komponente a) und einer metallorganischen Verbindung eines Metalls der Gruppe I, II, oder III des Periodensystems (Komponente b) besteht, dadurch gekennzeichnet, daß man die Polymerisation in Gegenwart eines Katalysators durchführt, dessen Komponente a in der Weise hergestellt wurde, daß die Magnesiumalkoholat-Dispersion gleichzeitig mit verschiedenen Verbindungen mehrerer Übergangsmetalle aus der Gruppe Titan, Zirkon, Vanadium und Chrom und danach mit einer chlorhaltigen aluminiumorganischen Verbindung umgesetzt wurde.

Die Erfindung betrifft weiterhin den in diesem Verfahren verwendeten Katalysator.

Aus der GB-A 2 015 548 ist bereits ein Ziegler Katalysator bekannt, der eine spezifische Titanverbindung und eine spezifische Zirkoniumverbindung enthält, aber die erfindungswesentliche Mg-Dispersion mit Teilchengrößen von 100 bis 3000 nm ist in dieser Schrift genausowenig wie der Einsatz einer Vanadiumverbindung erwähnt.

Zur Herstellung der Komponente a wird ein im Handel erhältliches Magnesiumalkoholat verwendet.

Dieses Magnesiumalkoholat ist eine Verbindung der Formel Mg(OR¹)(OR²), in der R¹ und R² gleich oder verschieden sind und einen Alkylrest mit 1 bis 6 Kohlenstoffatomen bedeuten. Beispiele sind Mg(CH₃)₂ Mg(OC₂H₅)₂, Mg(OiC₃H₇)₂, Mg(OnC₄H₉)₂, Mg(OCH₃)(OC₂H₅), Mg(OC₂H₅)(OnC₃H₇). Bevorzugt verwendet werden Mg(OC₂H₅)₂, Mg(OnC₃H₇)₂ und Mg(OiC₃H₇)₂. Das Magnesiumalkoholat wird in reiner Form eingesetzt.

Handelsübliches Mg(OC₂H₅)₂ hat im allgemeinen folgende Spezifikation:

| | |
|---|---|
| Mg-Gehalt | 21 bis 22 Gew.-% |
| Summe Mg(OH)₂/MgCO₃ | ≤ 1 Gew.-% |
| C₂H₅OH-Gehalt | < 0,3 Gew.-% |

Der mittlere Korndurchmesser liegt bei 500µm. 90% der Partikel haben Korndurchmesser im Bereich von 200 bis 1200 µm.

Das Magnesiumalkoholat wird in einem inerten gesättigten Kohlenwasserstoff suspendiert. Diese Suspension wird unter Schutzgas (Ar, N₂) in einem Reaktor mittels eines hochtourigen Dispergators (z.B. ®Ultra-Turrax oder ®Dispax, IKA-Maschinenbau Janke & Kunkel GmbH) in eine Magnesiumalkoholat-Dispersion überführt.

Die Magnesiumalkoholat-Suspension enthält das Magnesiumalkoholat als feste, unlösliche Teilchen im gesättigten Kohlenwasserstoff oder Kohlenwasserstoffgemisch suspendiert. Diese Suspension ist trübe und nicht transparent. Sie zeigt Newton'sches Verhalten und hat bei 25°C eine Viskosität von 0,0003 bis 0,0008 Pa.s. Wenn diese Magnesiumalkoholat-Suspension mit dem hochtourigen Dispergator bei 25°C behandelt wird, so beobachtet man im Verlauf eines Zeitraums von ca. 1/2 h eine rasche Zerkleinerung der suspendierten Teilchen, eine starke Zunahme der Trübung und ein Anstieg der Viskosität auf 0,0015 bis 0,0025 Pa.s. Im weiteren Verlauf (ca. 2 bis 8 h) verschwindet die Trübung und die Viskosität steigt weiter an auf 0,006 bis 0,010 Pa.s. Die Magnesiumalkoholat-Teilchen sind nicht mehr zu erkennen. Es ist eine Magnesiumalkoholat-Dispersion (Lyogel) entstanden. Diese MagnesiumalkoholatDispersionen (1,2 mol Magnesiumethylat/dm³ Dieselöl) zeigen kein Newton'sches Verhalten mehr. Die Scherviskosität als Funktion der Schergeschwindigkeit wird mit einem Rotationsviskosimeter bei 25°C gemessen. Diese Magnesiumalkoholat-Dispersionen haben ein pseudoplastisches Fließverhalten. Das pseudoplastische Fließverhalten ist dadurch gekennzeichnet, daß das Scherfließen erst oberhalb einer bestimmten Schubspannung einsetzt (im vorliegenden Fall: 1,2 mol Magnesiumethylat/dm³ Dieselöl (C₁₀/C₁₁-Benzinschnitt) bei ca. 2 Pa) und daß die Scherviskosität dann einen konstanten Wert annimmt (hier 0,006 Pa.s).

Wenn man diese Magnesiumalkoholat-Dispersion mit gesättigten Kohlenwasserstoffen oder Kohlenwasserstoffgemischen stark verdünnt (1:100), so kann man durch dynamische Lichtstreuung mit einem Meßgerät (Malvern System 4700) den mittleren Durchmesser der Magnesiumalkoholat-Teilchen bestimmen. Er liegt im Bereich 100 bis 3000 nm (0,1 bis 3 µm). Das bedeutet, daß der mittlere Durchmesser des suspendierten Teilchens (ca. 500 µm) um mehr als den Faktor 100 abgenommen hat.

Die Magnesiumalkoholat-Dispersion unterscheidet sich von der Suspension in zwei wesentlichen Merkmalen. Sie ist, wie vorstehend gezeigt, wesentlich viskoser als die Suspension und das dispergierte Magnesiumalkoholat sedimentiert im Gegensatz zum suspendierten Magnesiumalkoholat sehr viel langsamer, und sehr viel weniger (einige Stunden, Volumen des überstehenden Kohlenwasserstoffs bei suspendiertem Magnesiumalkoholat ca. 80 Vol-%, bei dispergierten Magnesiumalkoholat ca. 10 Vol-% bei gleichen Gehalt (131 g/dm³)).

Das dispergierte Magnesiumalkoholat kann man auch durch mechanische Zerkleinerung mit Glaskugeln (⌀ 1 cm) in einem Rundkolben herstellen, wobei der Kolbeninhalt mit einem zweiflügeligen Rührer bewegt wird. Dieses Verfahren ist allerdings sehr zeitaufwendig.

Als inerter gesättigter Kohlenwasserstoff eignet sich ein aliphatischer oder cycloaliphatischer Kohlenwasserstoff, wie Butan, Pentan, Hexan, Heptan, Isooctan, Cyclohexan, Methylcyclohexan, sowie ein aromatischer Kohlenwasserstoff wie Toluol, Xylol; auch hydrierte Dieselöl- oder Benzinfraktionen, die sorgfältig von Sauerstoff, Schwefelverbindungen und Feuchtigkeit befreit worden sind, sind brauchbar.

Die Magnesiumalkoholat-Dispersion wird dann in einer Stufe gleichzeitig mit einer Ti-Verbindung (TiCl₄, Ti(OR)₄ u.a.), Zr-Verbindung (Zr(OR)₄ u.a.), V-Verbindung (VCl₄, VOCl₃ u.a.) oder Cr-Verbindung (CrO₂Cl₂ u.a.) umgesetzt.

Es ist vorteilhaft, Vanadinverbindungen zusammen mit CHCl₃ einzusetzen.

Geeignete Kombinationen sind
a) TiCl₄ und VOCl₃ oder VCl₄ und CHCl₃,
b) TiCl₄ und ZrCl₄,
c) TiCl₄ und CrCl₃ oder CrO₂Cl₂,
d) VOCl₃ oder VCl₄ und ZrCl₄ und CHCl₃
e) VOCl₃ oder VCl₄ und CrCl₃ oder CrO₂Cl₂ und CHCl₃
f) CrO₂Cl₂ oder CrCl₃ und ZrCl₄
g) TiCl₄ und ZrCl₄ und VOCl₃ oder VCl₄ und CHCl₃
h) TiCl₄ und ZrCl₄ und CrCl₃ oder CrO₂Cl₂,
i) TiCl₄ und VOCl₃ oder VCl₄ und CrCl₃ oder CrO₂Cl₂ und CHCl₃ oder
k) VOCl₃ oder VCl₄ und ZrCl₄ und CrO₂Cl₂ oder CrCl₃ und CHCl₃
Bevorzugt ist die Kombination (a).

Dabei bildet sich ein feinteiliger Niederschlag, welcher hauptsächlich aus MgCl₂ und den eingesetzten Übergangsmetallen besteht und welcher die eingesetzten Übergangsmetalle ungefähr im eingewogenen Verhältnis enthält. Diese Suspension wird nun mit Et₃Al₂Cl₃ umgesetzt, wobei die Übergangsmetalle partiell reduziert werden, der Feststoff verfärbt sich dabei von weiß nach dunkelbraun. Anschließend wird die Suspension mehrmals mit Dieselöl gewaschen.

Das Magnesiumalkoholat wird mit den Übergangsmetallverbindungen bei einer Temperatur von 50 bis 100°C, vorzugsweise von 60 bis 90°C, in Gegenwart eines inerten Kohlenwasserstoffs unter Rühren umgesetzt. Auf 1 mol Magnesiumalkoholat werden bis 0,7 mol Übergangsmetallverbindung eingesetzt, vorzugsweise 0,2 bis 0,4 mol Übergangsmetallverbindung auf 1 mol Magnesiumalkoholat.

Die Reaktionsdauer beträgt 0,5 bis 8 Stunden, vorzugsweise 2 bis 6 Stunden.

Man erhält einen in Kohlenwasserstoff unlöslichen, magnesium- und übergangsmetallhaltigen Feststoff, der als Komponente a bezeichnet wird.

Die Herstellung des erfindungsgemäß zu verwendenden Polymerisationskatalysators erfolgt durch Zusammenbringen der Komponente a und einer metallorganischen Verbindung eines Metalls der Gruppe I, II oder III des Periodensystems (Komponente b).

Die Komponente a kann als Suspension direkt mit der Komponente b umgesetzt werden; sie kann jedoch auch zunächst als Feststoff isoliert, gelagert und zur späteren Weiterverwendung wieder suspendiert werden.

Vorzugsweise verwendet man als Komponente b aluminiumorganische Verbindungen. Als aluminiumorganische Verbindungen eignen sich chlorhaltige aluminiumorganische Verbindungen, die Dialkylaluminiummonochloride der Formel R³₂AlCl oder Alkylaluminiumsesquichloride der Formel R³₃Al₂Cl₃, worin R³ ein Alkylrest mit 1 bis 16 Kohlenstoffatomen ist. Als Beispiele seien genannt (C₂H₅)₂AlCl, (iC₄H₉)₂AlCl, (C₂H₅)₃Al₂Cl₃. Es können auch Gemische dieser Verbindungen eingesetzt werden.

Besonders bevorzugt werden als aluminiumorganische Verbindungen chlorfreie Verbindungen eingesetzt. Hierfür eignen sich einerseits die Umsetzungsprodukte von Aluminiumtrialkylen oder Aluminiumdialkylhydriden mit Kohlenwasserstoffresten mit 1 bis 6 Kohlenstoffatomen, vorzugsweise Al(iC₄H₉)₃ oder Al(iC₄H₉)₂H, mit 4 bis 20 Kohlenstoffatome enthaltenden Diolefinen, vorzugsweise Isopren. Beispielsweise sei Aluminiumisoprenyl genannt.

Andererseits eigenen sich als solche chlorfreie aluminiumorganische Verbindungen Aluminiumtrialkyle der Formel AlR³₃ oder Aluminiumdialkylhydride der Formel AlR³₂H, in denen R³ ein Alkylrest mit 1 bis 12 Kohlenstoffatomen bedeutet.
Beispiele sind Al(C₂H₅)₃, Al(C₂H₅)₂H, Al(C₃H₇)₃, Al(C₃H₇)₂H, Al(iC₄H₉)₃, Al(iC₄H₉)₂H, Al(C₈H₁₇)₃, Al(C₁₂H₂₅)₃, Al(C₂H₅)(C₁₂H₂₅)₂, Al(iC₄H₉)(C₁₂H₂₅)₂.

Es können auch Mischungen verschiedener aluminiumorganischer Verbindungen eingesetzt werden.

Beispielsweise seien folgende Mischungen genannt:
Al(C₂H₅)₃ und Al(iC₄H₉)₃, Al(C₂H₅)₂Cl und Al(C₈H₁₇)₃, Al(C₂H₅)₃ und Al(C₈H₁₇)₃, Al(C₄H₉)₃ und Al(C₈H₁₇)₃, Al(iC₄H₉)₃ und Al(C₈H₁₇)₃, Al(C₂H₅)₃ und Al(C₁₂H₂₅)₃, Al(iC₄H₉)₃undAl(C₁₂H₂₅)₃,Al(C₂H₅)₃undAl(C₁₆H₃₃)₃,Al(C₃H₇)₃undAl(C₁₈H₃₇)₂(iC₄H₉), Al(C₂H₅)₃ und Aluminiumisoprenyl (Umsetzungsprodukt von Isopren mit Al(iC₄H₉)₃ oder Al(iC₄H₉)₂H).

Das Mischen der Komponente a und der Komponente b kann vor der Polymerisation in einem Rührkessel bei einer Temperatur von -30 bis 150°C, vorzugsweise -10 bis 120°C erfolgen. Es ist auch möglich, die beiden Komponenten direkt im Polymerisationskessel bei einer Temperatur von 20 bis 200°C zu vereinigen. Die Zugabe der Komponente b kann jedoch auch in zwei Schritten erfolgen, indem vor der Polymerisationsreaktion die Komponente a mit einem Teil der Komponente b bei einer Temperatur von -30 bis 150°C voraktiviert wird und die weitere Zugabe der Komponente b in dem Polymerisationsreaktor bei einer Temperatur von 20 bis 200°C erfolgt.

Der erfindungsgemäßzu verwendende Polymerisationskatalysator wird zur Polymerisation von 1-Olefinen der Formel R⁴-CH = CH₂, in der R⁴ ein Wasserstoffatom oder einen Alkylrest mit 1 bis 10 C-Atomen bedeutet, eingesetzt, beispielsweise Ethylen, Propylen, Buten-(1), Hexen-(1), 4-Methylpenten-(1), Octen-(1).

Vorzugsweise wird Ethylen allein oder als Gemisch von mindestens 50 Gew.-% Ethylen und maximal 50 Gew.-% eines anderen 1-Olefins der obigen Formel polymerisiert.

Insbesondere wird Ethylen allein oder ein Gemisch von mindestens 90 Gew.-% Ethylen und maximal 10 Gew.-% eines anderen 1-Olefins der obigen Formel polymerisiert.

Die Polymerisation wird in bekannter Weise in Lösung, in Suspension oder in der Gasphase, kontinuierlich oder diskontinuierlich, ein- oder mehrstufig bei einer Temperatur von 20 bis 200°C, vorzugsweise 50 bis 150°C, durchgeführt. Der Druck beträgt 0,5 bis 50 bar. Bevorzugt ist die Polymerisation in dem technisch besonders interessanten Druckbereich von 5 bis 30 bar.

Dabei wird die Komponente a in einer Konzentration, bezogen auf Übergangsmetall, von 0,0001 bis 1, vorzugsweise 0,001 bis 0,5 mmol Übergangsmetall pro dm³ Dispergiermittel angewendet. Die metallorganische Verbindung wird in einer Konzentration von 0,1 bis 5 mmol, vorzugsweise 0,5 bis 4 mmol pro dm³ Dispergiermittel verwendet. Prinzipiell sind aber auch höhere Konzentrationen möglich.

Die Suspensionspolymerisation wird in einem für das Ziegler-Niederdruckverfahren gebräuchlichen inerten Dispergiermittel durchgeführt, beispielsweise in einem aliphatischen oder cycloaliphatischen Kohlenwasserstoff; als solcher sei beispielsweise Propan, Butan, Pentan, Hexan, Heptan, Isooctan, Cyclohexan, Methylcyclohexan genannt. Weiterhin können Benzin- bzw. hydrierte Dieselöffraktionen, die sorgfältig von Sauerstoff, Schwefelverbindungen und Feuchtigkeit befreit worden sind, benutzt werden.

Die Gasphasenpolymerisation kann direkt oder nach Vorpolymerisation des Katalysators in einem Suspensionsverfahren durchgeführt werden.

Die Molmasse des Polymerisats wird in bekannter Weise geregelt, vorzugsweise wird dazu Wasserstoff verwendet.

Das erfindungsgemäße Verfahren ergibt infolge der hohen Aktivität des verwendeten Katalysators Polymerisate mit sehr geringem Übergangsmetall- und Halogengehalt im Bereich von 2 bis 20 ppm.

Ferner ermöglicht das erfindungsgemäße Verfahren, die Katalysatoren so herzustellen, daß damit die Korngrößenverteilung und in gewissem Umfang auch die Kornform des entstehenden Polymerpulvers eingestellt werden kann.

Man erhält eine verbesserte Kornmorphologie, hohe mittlere Korndurchmesser (d₅₀-Werte), enge Korngrößenverteilung, keine Grob- und Feinanteile, und hohe Katalysatorproduktivitäten. Die Schüttdichten sind vergleichbar zum Stand der Technik.

Somit können beim Einsatz dieser Dispersionen der Magnesiumalkoholate die morphologischen Eigenschaften des Polymerpulvers beeinflußt werden, was für ein technisches Verfahren Vorteile bringt (Filtration des Polymerpulvers ist einfacher, die Restgehalte an Dispersionsmittel sind geringer, dadurch ist der Energieaufwand zum Trocknen geringer, der Transport des Polymerpulvers in der Anlage ist einfacher, die Rieselfähigkeit ist besser, der Feinanteil in den Zyklonen der Trockner ist geringer). Die hohe Katalysatorproduktivität ergibt geringere Katalysatorrestgehalte im Produkt.

In Polymerisationsexperimenten wurde mit den erfindungsgemäß hergestellten Katalysatoren gezeigt, daß unterschiedliche Übergangsmetallzentren vorliegen und die Melt Flow Ratio-Werte (MFR-Werte; MFR = MFI 190/21,6 / MFI 190/5, wobei der MFI (melt flow index) nach DIN 53737 gemessen wird) gegenüber dem Stand der Technik deutlich höher sind und durch Variation des H₂/C₂H₄-Verhältnis eingestellt werden können. M_{w}/Mₙ liegt oberhalb 15 und MFR ist gleich oder größer 10, vorzugsweise größer 25.

Die nachfolgenden Beispiele sollen die Erfindung erläutern.

Bei den Beispielen wurde zur Kontaktherstellung und zur Polymerisation eine hydrierte Dieselölfraktion mit einem Siedebereich von 130 bis 170°C verwendet.

Die Verhältnisse Mg : Ti(Zr, V, Cr) : Cl zur Charakterisierung der Katalysatoren wurden nach üblichen, analytischen Verfahren bestimmt.

Der zur Berechnung der Katalysatorproduktivität KA (vgl. Tabellen) erforderliche Titangehalt pro Masse des Katalysators wurde folgendermaßen ermittelt:

Aus der Katalysator-Suspension wurde ein bestimmtes Volumen pipettiert. Der Katalysator wurde mit Schwefelsäure hydrolysiert und der Titangehalt nach bekannten Methoden bestimmt. Ergebnis: Titangehalt (mmol) pro Volumeneinheit (cm³).

Aus der Suspension entnahm man eine zweite Probe, zog das Suspensionsmittel im Vakuum ab und wog den Feststoff.
Ergebnis: Feststoff (g) pro Volumeneinheit (cm³).
Damit erhält man durch Quotientenbildung mmol Ti/g Katalysator.

### Beispiel 1

1,2 mol (= 137 g) im Handel erhältliches Mg(OC₂H₅)₂ (Mg-Gehalt 21 bis 22 Gew.-%, C₂H₅OH-Gehalt < 0,3 Gew.-%, mittlerer Korndurchmesser 500 µm, 90 % der Teilchen haben Korndurchmesser im Bereich von 200 bis 1200 µm) wurden in 1,0 dm³ Dieselöl suspendiert. Die Magnesiumethylatteilchen sind im Kohlenwasserstoffgemisch unlöslich und bildeten daher eine Suspension.

Diese Suspension wurde in einem zylindrischen Glasgefäß unter Schutzgas (Ar, N₂) unter Ausschluß von Luft (O₂) und Feuchtigkeit (H₂O) mit einem im Handel erhältlichen Dispergator ( ®ULTRA-TURRAX T 50, Janke & Kunkel GmbH & Co. KG, D-7813 Staufen) in eine Magnesiumethylat/Dieselöl-Dispersion überführt. Dieser Vorgang dauerte bei Raumtemperatur beginnend mindestens 3 h. Das Gefäß mußte stark gekühlt werden, um die Temperatur im Gefäß nicht stark ansteigen zu lassen (maximal auf 50 °C).

Die Magnesiumethylat/Dieselöl-Suspension enthielt die Magnesiumethylatteilchen in suspendierter Form. Ohne Rühren sedimentierten diese Teilchen in ca. 10 Minuten in den unteren Teil des Gefäßes. Die Scherviskosität dieser Suspension betrug bei 25 °C 0,00065 Pa s. Die Magnesiumethylat/Dieselöl-Suspension war also dünnflüssig und enthielt grobe Partikel von Magnesiumethylat (200 bis 1200 µm). Nach Einschalten des Dispergators war folgendes zu beobachten: Im Verlauf einer halben Stunde wurden die suspendierten Magnesiumethylatteilchen rasch zerkleinert. Das war mit einer starken Zunahme der Trübung und einem Viskositätsanstieg verbunden. Die Viskosität (Messung mit einem Rotationsviskosimeter von Haake) stieg auf 0,0020 Pa.s. Im weiteren Verlauf stieg die Viskosität weiter an auf 0,006 bis 0,010 Pa.s und die suspendierten Teilchen verschwanden. Es bildete sich eine Magnesiumethylat/Dieselöl-Dispersion (Lyogel). Die mit einem ®Malvern System 4700 bestimmte, mittlere Partikelgröße (für diese Messung mußte mit Dieselöl um den Faktor 1:100 verdünnt werden) lag bei 100 bis 3000 nm (0.1 bis 3µm).

Die Magnesiumethylat/Dieselöl-Dispersion zeigte gegenüber der Magnesiumethylat/Dieselöl-Suspension folgende charakteristische Unterschiede: Die mittlere Teilchengröße sank von ca. 500 µm auf 100 bis 300 nm. Die Magnesiumethylat/Dieselöl-Suspension zeigte Newton'sches Fließverhalten bei einer Viskosität von 0,00065 Pa.s/ 25°C. Die Magnesiumethylat/Dieselöl-Dispersion hingegen zeigte pseudoplastisches Verhalten bei einer wesentlich höheren Viskosität von 0,006 Pa.s/25°C. Das Fließen setzte bei einer Schubspannung von 2,0 Pa ein.

Nach Sedimentation konnte das Sedimentationsvolumen dieser Magnesiumalkoholat/Dieselöl-Dispersion bestimmt werden. Es betrug bei einem Magnesiumalkoholat-Gehalt von 137 g in 1 dm³ Dieselöl 30 bis 40 Vol.%. Der sedimentierte Anteil hatte eine graue Farbe und war ein thixotropes Lyogel mit hoher Viskosität. Wenn man das Gefäß umdrehte, so verblieb das Lyogel am Boden des Gefäßes und trennte sich vom Dieselöl. Bei kräftigem Schütteln bildete sich aus dem Lyogel mit dem überstehenden Dieselöl eine niedrigviskose Dispersion.

### Beispiel 2

In einem 2 dm³ Vierhalskolben mit KPG-Rührer wurden 500 mmol dipergiertes Mg(OEt)₂ in 1000 cm³ Dieselöl vorgelegt. Die gelartige Dispersion wurde unter Rühren (300 U/min) auf 85°C erhitzt und mit den Übergangsmetallverbindungen umgesetzt.

### Variante A (Ti : V ≈ 9: 1)

Innerhalb von 4 h wurden 135 mmol TiCl₄ und 15 mmol VCl₄ aus jeweils separaten Dosiervorrichtungen zugetropft.

### Variante B (Ti : V ≈ 8 : 2)

Innerhalb von 4 h wurden 120 mmol TiCl₄ und 30 mmol VOCl₃ aus jeweils separaten Dosiervorrichtungen zugetropft.

### Variante C (Ti : V ≈ 7 : 3)

Innerhalb von 4 h wurden 105 mmol TiCl₄ und 45 mmol VOCl₃, gelöst in 160 cm³ Diethylether aus jeweils separaten Dosiervorrichtungen zugetropft.

### Variante D (Ti : V ≈ 1:1)

Innerhalb von 4 h wurden 75 mmol TiCl₄ und 75 mmol VOCl₃ mit 3,75 mol CHCl₃, verdünnt mit 89 cm³ Dieselöl, aus jeweils separaten Dosiervorrichtungen zugetropft.

### Variante E (Ti : Zr ≈ 1:1)

Innerhalb von 4 h wurden 150 mmol TiCl₄ und 150 mmol ZrCl₄, suspendiert in 150 cm³ Dieselöl, aus jeweils separaten Dosiervorrichtungen zugetropft.

### Variante F (Ti : Cr ≈ 1:1)

Innerhalb von 4 h wurden 150 mmol TiCl₄ und 150 mmol CrO₂Cl₂, suspendiert in 200 cm³ Dieselöl, aus jeweils separaten Dosiervorrichtungen zugetropft.

Anschließend wurde das Gemenge auf 110 °C erhitzt und bei dieser Temperatur mit 350 mmol Et₃Al₂Cl₃, gelöst in 500 cm³ Dieselöl, bei einer Rührerdrehzahl von 300 U/min innerhalb von 2 h umgesetzt.

Die Suspension wurde nach dem Abkühlen analysiert (Tabelle 1). Die Katalysatoren C und D wurden 4 mal heiß (T = 75 °C) mit jeweils 650 cm³ Dieselöl gewaschen, bis der Cl-Gehalt des Dispergiermittels unter 10 mmol/dm³ gesunken war. Die Analysenwerte dieser gewaschenen Feststoffe sind in Tabelle 2 angegeben.

**Tabelle 1**

| Analysenwerte der ungewaschenen Katalysatoren bezogen auf Mg. | | | | |
|---|---|---|---|---|
| Katalysator | Mg | Ti | V, Zr oder Cr | Cl |
| Variante A | 1 | 0,259 | 0,021 | 2,875 |
| Variante B | 1 | 0,219 | 0,051 | 2,546 |
| Variante C | 1 | 0,190 | 0,072 | 2,837 |
| Variante D | 1 | 0,106 | 0,150 | 4,067 |
| Variante E | 1 | 0,137 | 0,117 | 3,895 |
| Variante F | 1 | 0,130 | 0,104 | 3,805 |

**Tabelle 2**

| Analysenwerte der gewaschenen Katalysatoren bezogen auf Mg. | | | | |
|---|---|---|---|---|
| Katalysator | Mg | Ti | V | Cl |
| Variante C | 1 | 0,208 | 0,078 | 2,168 |
| Variante D | 1 | 0,047 | 0,141 | 2,24 |

### Beispiel 3

Die im Beispiel 2 beschriebenen Katalysatoren wurden unter den folgenden Bedingungen zur Polymerisation von Ethylen verwendet:

In einen 1,5 dm³ Stahlautoklaven, der mit 750 dm³ Dieselöl beschickt wurde, wurden bei 85 °C unter N₂-Überlagerung die angebene Menge der verdünnten Katalysatorsuspension und die ebenfalls angegebene Menge einer Cokatalysatorlösung gegeben. Danach wurde der Autoklav verschlossen und 2 mal mit H₂ gespült. Anschließend wurden 1,5 oder 2 bar H₂ und 5,5 oder 5 bar Ethylen aufgedrückt. Der Gesamtdruck von 7 bar wurde über 2 h konstant gehalten, indem das durch Polymerisation verbrauchte Ethylen kontinuierlich nachdosiert wurde. Nach 2 h wurde die Reaktion durch Entspannen und Unterbrechen der Ethylenzufuhr abgebrochen und das Polymere durch Filtration und Trocknung vom Dieselöl abgetrennt. Die genauen Bedingungen sowie die Werte für KA, Schmelzindices, Schüttdichte, M_{w}/Mₙ, VZ sind in den folgenden Tabellen (3 bis 9) zusammengefaßt.

**Tabelle 3:**

| Katalysator Typ A (1 bar H₂, 5 bar C₂H₄) | | | | | | | | |
|---|---|---|---|---|---|---|---|---|
| Nr | Kontaktmenge | Aktivator und Menge | KA (Ti+V) | MFl₅ | MFR | M_{w}/Mₙ | VZ | SD |
| | mmol Ti | mmol | kg/mmol | g/10min | 21,6/5 | | cm³/g | g/cm³ |
| 1 | 0,01 | TEA, 3,0 CHCl₃, 0,76 | 4,000 | 0,72 | 11,16 | - | 275 | 0,23 |
| 2 | 0,01 | TiBA, 5,0 | 10,400 | 0,82 | 10,8 | 6,3 | 310 | 0,26 |
| 3 | 0,01 | TiBA, 3,5 CHCl₃, 0,09 | 2,500 | 1,59 | 11,85 | 6,2 | 260 | 0,20 |
| KA = Katalysatorproduktivität | | | | | | | | |

**Tabelle 4:**

| Katalysator Typ B (1 bar H₂, 5 bar C₂H₄) | | | | | | | | |
|---|---|---|---|---|---|---|---|---|
| Nr | Kontakt | Aktivator und Menge | KA (Ti+V) | MFl₅ | MFR | M_{w}/Mₙ | VZ | SD |
| | mmol Ti | mmol | kg/mmol | g/10min | 21,6/5 | | cm³/g | g/cm³ |
| 4 | 0,01 | TEA, 3,0 | | | | | | |
| | | CHCl₃, 1,8 | 0,900 | 0,76 | 10,33 | - | 270 | - |
| 5 | 0,01 | TiBA, 5,0 | | | | | | |
| | | CHCl₃, 0,25 | 5,800 | 1,08 | 12,24 | 6,1 | 250 | 0,27 |

**Tabelle 5:**

| Katalysator Typ C (1 bar H₂, 5 bar C₂H₄) | | | | | | | | |
|---|---|---|---|---|---|---|---|---|
| Nr | Kontakt | Aktivator und Menge | KA (Ti+V) | MFl₅ | MFR | M_{w}/Mₙ | VZ | SD |
| | mmol Ti | mmol | kg/mmol | g/10min | 21,6/5 | | cm³/g | g/cm³ |
| ungewaschener Kontakt | | | | | | | | |
| 6 | 0,01 | TEA, 3,0 | | | | | | |
| | | CHCl₃, 1,6 | 1,600 | 1,27 | 11,80 | - | 240 | 0,21 |
| | | | | | | | | |

| gewaschener Kontakt | | | | | | | | |
|---|---|---|---|---|---|---|---|---|
| 7 | 0,01 | TiBA, 5,0 | 4,800 | 0,53 | 12,40 | 6,0 | 330 | 0,25 |
| 8 | 0,01 | TiBA, 5,0 | | | | | | |
| | | CHCl₃, 1,6 | 2,300 | 0,58 | 12,91 | - | 300 | 0,27 |

**Tabelle 6:**

| Katalysator Typ D, ungewaschen (1.0 bar H₂, 5.0 bar C₂H₄) | | | | | | | | |
|---|---|---|---|---|---|---|---|---|
| Nr | Kontakt | Aktivator und Menge | KA (Ti+V) | MFl₅ | MFR | M_{w}/Mₙ | VZ | SD |
| | mmol Ti | mmol | kg/mmol | g/10min | 21,6/5 | | cm³/g | g/cm³ |
| 9 | 0,01 | TiBA, 5,0 | 11,200 | 3,44 | 11,24 | 6,8 | 215 | 0,28 |
| 10 | 0,01 | TEA, 3,0 | 4,300 | 1,79 | 13,29 | 7,6 | 235 | 0,27 |

**Tabelle 7:**

| Katalysator Typ D, gewaschen | | | | | | | | |
|---|---|---|---|---|---|---|---|---|
| Nr | Kontakt | Aktivator und Menge | KA (Ti+V) | MFl₅ | MFR | M_{w}/Mₙ | VZ | SD |
| | mmol Ti+V | mmol | kg/mmol | g/10min | 21,6/5 | | cm³/g | g/cm³ |
| 1.0 bar H₂, 5.0 bar C₂H₄ | | | | | | | | |
| | | | | | | | | |
| 11 | 0,031 | TiBA, 5,0 | 5,400 | 0,82 | 10,2 | - | - | 0,28 |
| 12 | 0,031 | TiBA, 5,0 | 4,590 | 2,06 | 13,01 | - | - | 0,22 |
| 13 | 0,031 | TEA, 3,0 | 3,980 | 1,26 | 13,41 | 8,8 | 250 | - |
| 14 | 0,031 | TEA, 3,0 | 4,240 | 1,74 | 14,85 | - | 230 | - |
| 15 | 0,031 | TiBA, 5,0 | | | | | | |
| | | CHCl₃, 4,0 | 5,820 | 10,4 | 21,37 | 24,0 | 160 | 0,28 |
| 16 | 0,031 | TiBA, 5,0 | | | | | | |
| | | CHCl₃, 4,0 | 6,070 | 10,72 | 15,45 | - | 155 | 0,25 |
| | | | | | | | | |

| 0,5 bar H₂, 5,5 bar C₂H₄ | | | | | | | | |
|---|---|---|---|---|---|---|---|---|
| | | | | | | | | |
| 17 | 0,031 | TEA, 3,0 | | | | | | |
| | | CHCl₃, 3,0 | 5,210 | 3,13 | 18,2 | - | 210 | 0,26 |
| 18 | 0,031 | TEA, 3,0 | | | | | | |
| | | CHCl₃, 3,0 | 7,060 | 1,36 | 21,4 | 18,6 | 235 | 0,26 |
| 19 | 0,031 | TiBA, 5,0 | | | | | | |
| | | CHCl₃, 1,9 | 7,950 | 0,98 | 20,9 | 28,4 | 250 | 0,30 |
| 20 | 0,031 | TiBA, 5,0 | | | | | | |
| | | CHCl₃, 4,0 | 6,380 | 2,04 | 22,12 | - | 220 | 0,22 |

**Tabelle 8:**

| Katalysator Typ E | | | | | | | | |
|---|---|---|---|---|---|---|---|---|
| Nr Kontakt | | Aktivator und Menge | KA (Ti+Zr) | MFl₅ | MFR | M_{w}/Mₙ | VZ | SD |
| mmolTi+Zr mmol | | | kg/mmol | g/10min | 21,6/5 | | cm³/g | g/cm³ |
| 1,0 bar H₂, 5,0 bar C₂H₄ | | | | | | | | |
| 21 | 0,016 | TiBA, 5,0 | 4,730 | 1,08 | 11,9 | - | 270 | 0,28 |

| 0,5 bar H₂, 5,5 bar C₂H₄ | | | | | | | | |
|---|---|---|---|---|---|---|---|---|
| 1,5 bar H₂, 4,5 bar C₂H₄ | | | | | | | | |
| 22 | 0,016 | TiBA, 5,0 | 3,420 | 2,52 | 10,3 | - | - | 0,24 |

**Tabelle 9:**

| Katalysator Typ F | | | | | | | | |
|---|---|---|---|---|---|---|---|---|
| Nr | Kontakt | Aktivator und Menge | KA (Ti+Cr) | MFl₅ | MFR | M_{w}/Mₙ | VZ | SD |
| | mmolTi+Cr | mmol | kg/mmol | g/10min | 21,6/5 | | cm³/g | g/cm³ |
| 23 | 0,02 | DEALOX, 3,0 | 3,850 | 5,42 | 16,2 | 8,2 | 305 | 0,31 |
| 24 | 0,02 | DEALOX, 3,0 | 4,900 | 3,01 | 14,0 | - | 260 | 0,28 |
| 25 | 0,02 | DEALOX, 3,0 | 4,720 | 1,89 | 13,9 | - | 410 | 0,32 |
| DEALOX = Diethylaluminoxan | | | | | | | | |

## Patentansprüche

1. Verfahren zur Herstellung eines Polyolefins mit einem MFR-Wert gleich oder größer 10 durch Polymerisation eines 1-Olefins der Formel R¹CH =CH₂, in der R¹ Wasserstoff oder einen Alkylrest mit 1 bis 10 Kohlenstoffatomen bedeutet, in Suspension, in Lösung oder in der Gasphase, bei einer Temperatur von 20 bis 200°C und einem Druck von 0,5 bis 50 bar, in Gegenwart eines Katalysators, der aus dem Umsetzungsprodukt einer Magnesiumalkoholat-Dispersion, deren Teilchengröße 100 bis 3000 nm beträgt, mit einer Übergangsmetallverbindung (Komponente a) und einer metallorganischen Verbindung eines Metalls der Gruppe I, II, oder III des Periodensystems (Komponente b) besteht, dadurch gekennzeichnet, daß man die Polymerisation in Gegenwart eines Katalysators durchführt, dessen Komponente a in der Weise hergestellt wurde, daß die Magnesiumalkoholat-Dispersion gleichzeitig mit verschiedenen Verbindungen mehrerer Übergangsmetalle aus der Gruppe Titan, Zirkon, Vanadium und Chrom und danach mit einer chlorhaltigen aluminiumorganischen Verbindung umgesetzt wurde.

2. Verfahren nach Anspruch 1, dadurch gekennzeichnet, daß ein Magnesiumalkoholat der Formel Mg(OR¹)(OR²), in der R¹ und R² gleich oder verschieden sind und einen Alkylrest mit 1 bis 6 C-Atomen bedeuten, eingesetzt wurde.

3. Verfahren nach Anspruch 1, dadurch gekennzeichnet, daß das eingesetzte Magnesiumalkoholat Mg(CH₃)₂, Mg(OC₂H₅)₂, Mg(OnC₃H₇)₂ oder Mg(OiC₃H₇)₂ war.

4. Verfahren nach Anspruch 1, dadurch gekennzeichnet, daß die zur Herstellung der Komponente a verwendete chlorhaltige aluminiumorganische Verbindung Ethylalumniumsesquichlorid war.

5. Verfahren nach Anspruch 1, dadurch gekennzeichnet, daß als Übergangsmetallverbindungen TiCl₄, VCl₄, VOCl₃, ZrCl₄, CrCl₃ oder CrO₂Cl₂ verwendet wurden.

6. Verfahren nach Anspruch 5, dadurch gekennzeichnet, daß bei Verwendung von VOCl₃ zusätzlich CHCl₃ eingesetzt wurde.

7. Verfahren nach Anspruch 1, dadurch gekennzeichnet, daß die Komponente b aus einer metallorganischen Verbindung eines Metalls der Gruppe III des Periodensystems und CHCl₃ besteht.

## Claims

1. A process for producing a polyolefin having an MFR value equal to or greater than 10 by polymerization of a 1-olefin of the formula R¹CH=CH₂, in which R¹ is hydrogen or an alkyl radical having from 1 to 10 carbon atoms, in suspension, in solution or in the gas phase, at a temperature of from 20 to 200°C and a pressure of from 0.5 to 50 bar, in the presence of a catalyst composed of the reaction product of a magnesium alkoxide dispersion having a particle size of from 100 to 3000 nm with a transition metal compound (component a) and an organometallic compound of a metal of group I, II or III of the Periodic Table (component b), which comprises carrying out the polymerization in the presence of a catalyst whose component a was prepared by reacting the magnesium alkoxide dispersion simultaneously with different compounds of a number of transition metals selected from the group comprising titanium, zirconium, vanadium and chromium and then reacting the mixture with a chlorine-containing organoaluminum compound.

2. The process as claimed in claim 1, wherein a magnesium alkoxide of the formula Mg(OR¹)(OR²), in which R¹ and R² are identical or different and are alkyl radicals having from 1 to 6 carbon atoms, was used.

3. The process as claimed in claim 1, wherein the magnesium alkoxide used was Mg(CH₃)₂, Mg(OC₂H₅)₂, Mg(OnC₃H₇)₂ or Mg(OiC₃H₇)₂.

4. The process as claimed in claim 1, wherein the chlorine-containing organoaluminum compound used for the preparation of component a was ethylaluminum sesquichloride.

5. The process as claimed in claim 1, wherein the transition metal compounds used were TiCl₄, VCl₄, VOCl₃, ZrCl₄, CrCl₃ or CrO₂Cl₂.

6. The process as claimed in claim 5, wherein if VOCl₃ was used CHCl₃ was used in addition.

7. The process as claimed in claim 1, wherein the component b comprises an organometallic compound of a metal of group III of the Periodic Table and CHCl₃.

## Revendications

1. Procédé de préparation d'une polyoléfine avec une valeur du rapport de fusion MFR égale ou supérieure à 10 par polymérisation d'une 1-oléfine de formule R¹CH=CH₂, dans laquelle R¹ représente un atome d'hydrogène ou un groupe alkyle avec 1 à 10 atomes de carbone, en suspension, en solution ou en phase gazeuse, à une température de 20 à 200°C et sous une pression de 0,5 à 50 bar, en présence d'un catalyseur, qui est constitué du produit de la réaction d'une dispersion d'alcoolate de magnésium, dont la taille des particules est de 100 à 3000 nm, avec un composé de métaux de transition (composant a) et d'un composé organométallique d'un métal du groupe I, II, ou III de la classification périodique des éléments (composant b), caractérisé en ce que, l'on réalise la polymérisation en présence d'un catalyseur, dont le composant a a été préparé de manière à ce que la dispersion d'alcoolate de magnésium ait réagi en même temps avec différents composés de plusieurs métaux de transition du groupe du titane, du zirconium, du vanadium et du chrome et ensuite avec un composé organoaluminium contenant du chlore.

2. Procédé selon la revendication 1, caractérisé en ce que l'on utilise un alcoolate de magnésium de formule Mg(OR¹)(OR²), dans laquelle R¹ et R² sont identiques ou différents et représentent un groupe alkyle avec 1 à 6 atomes de carbone.

3. Procédé selon la revendication 1, caractérisé en ce que l'alcoolate de magnésium utilisé est Mg(CH₃)₂, Mg(OC₂H₅)₂, Mg(OnC₃H₇)₂ ou Mg(OiC₃H₇)₂.

4. Procédé selon la revendication 1, caractérisé en ce que le composé organoaluminium contenant du chlore utilisé pour la préparation du composant a est le sesquichlorure d'éthylaluminium.

5. Procédé selon la revendication 1, caractérisé en ce qu'on utilise comme composés de métaux de transition TiCl₄, VCl₄, VOCl₃, ZrCl₄, CrCl₃ ou CrO₂Cl₂.

6. Procédé selon la revendication 5, caractérisé en ce que lors de l'utilisation de VOCl₃, on utilise en plus CHCl₃.

7. Procédé selon la revendication 1, caractérisé en ce que le composant b est constitué d'un composé organométallique d'un métal du groupe III de la classification périodique des éléments et de CHCl₃.
